**Europäisches Patentamt**

**European Patent Office**

**Office européen des brevets**

(11) Veröffentlichungsnummer : **0 043 973**
**B1**

(12)

# EUROPÄISCHE PATENTSCHRIFT

(45) Veröffentlichungstag der Patentschrift :
28.11.84

(51) Int. Cl.³ : **H 02 P 5/40**

(21) Anmeldenummer : **81105032.7**

(22) Anmeldetag : **29.06.81**

(54) Drehfeldmaschinenantrieb mit einer umrichtergespeisten Drehfeldmaschine und einer mit zwei Wechselspannungsintegratoren und einer Rechenmodellschaltung verbundenen Umrichtersteuerung.

(30) Priorität : **10.07.80 DE 3026202**

(43) Veröffentlichungstag der Anmeldung :
**20.01.82 Patentblatt 82/03**

(45) Bekanntmachung des Hinweises auf die Patenterteilung : **28.11.84 Patentblatt 84/48**

(84) Benannte Vertragsstaaten :
**CH DE FR GB LI SE**

(56) Entgegenhaltungen :
**EP-A- 0 007 550**
**EP-A- 0 007 552**
**DE-A- 1 806 769**
**DE-A- 2 131 780**

(73) Patentinhaber : **Siemens Aktiengesellschaft**
**Berlin und München Wittelsbacherplatz 2**
**D-8000 München 2 (DE)**

(72) Erfinder : **Blaschke, Felix, Dr.**
**Steinforststrasse 19**
**D-8520 Erlangen (DE)**
Erfinder : **Salzmann, Theodor, Dipl.-Ing.**
**Leimberger Strasse 29**
**D-8520 Erlangen (DE)**

**Beschreibung**

Die Erfindung betrifft einen Drehfeldmaschinenantrieb mit einem Umrichter, einer vom Umrichter gespeisten Drehfeldmaschine, zwei Wechselspannungsintegratoren und einer mit den Ausgängen der Wechselspannungsintegratoren verbundenen Umrichtersteuerung. Dabei enthält jeder Wechselspannungsintegrator einen Integrator, dessen Eingang eine aus den Ständerströmen und Ständerspannungen der Maschine gebildete Komponente des EMK-Vektors der Maschine zugeführt und an dessen Ausgang eine entsprechende Komponente des Magnetflußvektors der Maschine abgegriffen ist, sowie eine den Integratorausgang mit dem Integratoreingang verbindende Rückführungsleitung und einen Nullpunktregler in der Rückführungsleitung. Der Umrichtersteuerung sind Sollwerte für die unabhängige Steuerung der zum Flußvektor parallelen und der dazu senkrechten Komponente des Ständerstromes eingegeben.

Bei einer Asynchronmaschine bestimmt der Ständerstromvektor, der aus den in den Ständerwicklungen fließenden Strömen unter Berücksichtigung der Wicklungsachsen durch vektorielle Addition gebildet ist, mit seiner zur Achse des Magnetflusses parallelen Komponente (Magnetisierungsstrom) den Magnetfluß der Maschine, während die dazu senkrechte Komponente (Wirkstrom) das Drehmoment der Maschine beeinflußt. Gelingt es nun, den die Ständerwicklungen speisenden Umrichter so zu steuern, daß die feldparallele Komponente und damit die Stärke des in der Maschine induzierten Magnetfeldes konstant bleibt, so kann über die feldsenkrechte Komponente des Ständerstromes das Drehmoment der Maschine gesteuert werden. Eine derartige feldorientierte Regelung zeichnet sich durch eine große Genauigkeit und Übersichtlichkeit bei optimaler Ausnutzung von Umrichter und Maschine aus. Da hierbei der Sollwert des Ständerstromes bezüglich der beiden feldorientierten Koordinaten oder zumindest durch den Betrag und die Winkellage des Ständerstromvektors bezüglich des Flußvektors vorgegeben wird, muß für die Steuerung des Umrichters die Lage Flußvektors bezüglich der Ständerstromwicklungen, d. h. in einem raumfest zum Ständer gegebenen Bezugssystem, bekannt sein.

Bei einer Synchronmaschine liegen die Verhältnisse ähnlich, wobei jedoch zu berücksichtigen ist, daß neben der feldparallelen Komponente des Ständerstromes auch die feldparallele Komponente des Erregerstroms zur Bildung des Magnetflusses beiträgt. Unter dem magnetisierenden Strom $i_{\varphi1}$ bei einer Synchronmaschine wird daher im folgenden stets die feldparallele Komponente der Vektorsumme aus Ständerstrom und Erregerstrom verstanden.

Die Lage des Magnetflußvektors kann durch Hallsonden erfaßt werden, was jedoch insbesondere wegen des Raumbedarfes und der unter den herrschenden Bedingungen erhöhten Fehleranfälligkeit der Hallsonden vermieden wird. Bei der aus der deutschen Patentschrift 28 33 542 bekannten, eingangs geschilderten Anordnung wird daher der Magnetflußvektor hinsichtlich Lage und Betrag dadurch gebildet, daß in einem Rechenmodell aus Eingangsgrößender Drehfeldmaschine zwei Komponenten des Magnetflußvektors in einem ständerbezogenen Koordinatensystem berechnet werden.

Das dort verwendete Rechenmodell kann als Spannungsmodell bezeichnet werden, da die Sternspannung an einer Maschinenzuleitung nach Subtraktion des ohmschen Spannungsabfalls die an dieser Zuleitung auftretende EMK ist, aus der durch Integration der von der betreffenden Ständerwicklung gelieferte Beitrag zum Fluß der Maschine gebildet werden kann. Durch Aufschaltung eines dem entsprechenden Maschinenstrom proportionalen Signals kann dabei auch die Streuinduktivität der Maschine berücksichtigt werden. Die beiden Wechselspannungsintegratoren der bekannten Schaltung, die den Spannungen und Strömen in zwei voneinander verschiedenen Maschinenzuleitungen zugeordnet sind, liefern somit als Ausgangsgrößen zwei Komponenten, die den Flußvektor in einem von den Wicklungsachsen der Ständerwicklungen festgelegten Koordinatensystem bestimmen. Anstelle der direkten Eingabe der Sternspannung und des Stromes einer Maschinenleitung kann analog zu dem Ständerstromvektor durch entsprechende vektorielle Addition der Ständerspannungen auch ein Spannungsvektor in einem ständerbezogenen, beispielsweise kartesischen Koordinatensystem gebildet werden, dessen Komponenten zusammen mit den entsprechenden Komponenten des Stromvektors als Eingangsgrößen für die Wechselspannungsintegratoren verwendet werden. Der Flußvektor wird dann ebenfalls in den Komponenten dieses Koordinatensystems berechnet.

Als Wechselstromintegratoren für eine derartige feldorientierte Regelung mit Spannungsmodell sind besonders Schaltungsanordnungen geeignet, wie sie in der deutschen Patentschrift 2 833 593 beschrieben sind und beim Verfahren nach der erwähnten deutschen Patenschrift 2 833 542 vorgesehen sind.

Um ein Wegdriften der Integratoren zu vermeiden, muß jedoch durch eine Nullpunktregelung der Integrator-Nullpunkt konstant gehalten werden. Dazu dient nach der erwähnten deutschen Patentschrift 2 833 593 der aus einem P-Regler und aus einem I-Regler bestehende Nullpunktregler in der Integratorrückführungsleitung, dessen Durchgriff frequenzabhängig gewichtet ist. Mit der Nullpunktdrift des Integrators werden jedoch auch niedrigen Betriebsfrequenzen entsprechende langsame Änderungen der am Integratorausgang abzugreifenden Flußkomponente unterdrückt. Bei stationärem Betrieb erzeugt die Anordnung ferner einen Winkelfehler, der ebenfalls vor allem bei niedrigen Frequenzen zu einer störenden Fehlorientierung führt, falls beim Betrieb der Drehfeldmaschine die Sollwerte der einzuspeisenden Stromvektoren auf den ermittelten Flußvektor orientiert sind. Der guten Dynamik des Spannungsmodells steht demnach eine Fehlorientierung beim stationären Betrieb gegenüber, die vor allem bei

2

niedrigen Frequenzen zu Störungen führen kann. Hinzu kommt, daß auch bei höheren Betriebsfrequenzen für Ober- und Unterschwingungen, die vom Stromrichter verursacht werden, Werte für die Dämpfung und den Winkelfehler auftreten, die von dem auf die Betriebsfrequenz abgestimmten Wert abweichen und dazu führen können, daß diese Schwingungen nicht mehr ausreichend gedämpft werden.

Ein Modellwert für den in der Drehfeldmaschine tatsächlich auftretenden Fluß kann jedoch auch durch eine andere Rechenmodellschaltung (« Strommodell ») ermittelt werden, dessen Eingängen lediglich Eingangsspannungen zugeführt werden, die dem Ständerstrom, dem Magnetisierungsstrom und der Läuferstellung entsprechen. Diese Rechenmodellschaltung bildet die in der Drehfeldmaschine auftretenden, zur Ausbildung des Flusses führenden Vorgänge in entsprechenden elektronischen Recheneinheiten nach und ist jeweils nach dem Typ der verwendeten Drehfeldmaschine (Synchronmaschine bzw. Asynchronmaschine) unterschiedlich aufgebaut. In dem Vortrag « Regelverfahren für Drehfeldmaschinen » vor dem Bildungswerk des « Vereins deutscher Ingenieure », dessen Manuskript vom VDI-Bildungswerk, Düsseldorf, unter der Bestell-Nr. BW 3232 vertrieben wird, ist die Struktur der Asynchronmaschine bzw. der Synchronmaschine analysiert. Für alle weiteren Erörterungen wird die dort eingeführte Nomenklatur verwendet, wonach mit den Indizes $\varphi 1$ und $\varphi 2$ die feldparallele und feldsenkrechte Komponente eines Vektors, mit den Indizes $\alpha$ und $\beta$ die Vektorkomponenten in einem kartesischen, raumfesten Bezugssystem und mit dem Index s eine im Ständer auftretende Größe bezeichnet wird.

In Bild 5 auf Seite 16 ist ein Umrichter U für eine Asynchronmaschine dargestellt, dessen Steuerung auf der linken Seite die Sollwerte für den zum Fluß parallelen Anteil des Ständerstromes (Magnetisierungsstrom $i_{\varphi 1}{}^{s*}$) und den zum Fluß senkrechten Anteil ($i_{\varphi 2}{}^{s*}$) des Ständerstromes zugeführt sind. Der Umrichter speist die rechts in einer Ersatzstruktur dargestellte Asynchronmaschine mit einem Ständerstrom, der in einem ständerbezogenen Koordinatensystem den Betrag $i^s$ und den Winkel $\varepsilon_s{}^s$ besitzt. Für die Steuerung der Asynchronmaschine ist links eine Rechenmodellschaltung angegeben, die aus den erwähnten feldorientierten Stromsollwerten die Schlupffrequenz und daraus mittels der Läuferstellung, die als Winkel $\lambda_s$ der Läuferachse bezüglich einer Achse des ständerbezogenen Koordinatensystems eingegeben wird, den Winkel des Modellflußvektors im ständerbezogenen Koordinatensystem ermittelt. Durch ein auf die Zeitkonstante der Maschine abgestimmtes Dynamikglied (Verzögerungsglied) wird aus der Magnetisierungsstromkomponente $i_{\varphi 1}{}^{s*}$ des eingegebenen Ständerstromsollwertes ein Modellwert für den Magnetisierungsstrom-Istwert und damit für den Betrag des auftretenden Flusses gebildet. Diese Modellschaltung liefert also einen nur aus den Ständerströmen berechneten Modellwert für den Betrag und den Winkel des Flusses als ständerbezogene Polarkoordinaten, die bei Bedarf in die Komponenten des Modellflusses bezüglich kartesischer ständerfester Achsen umgerechnet werden können.

In ähnlicher Weise ist in Bild 10 auf Seite 19 eine Anordnung mit einer Synchronmaschine angegeben, bei der dem Umrichter U im linken Teil neben den Sollwerten $i_{\varphi 1}{}^{s*}$ und $i_{\varphi 2}{}^{s*}$ nach der Sollwert $i_{\varphi 1}{}^{e*}$ für die zum Fluß parallele Komponente des Erregerstromes vorgegeben ist. Bei der Synchronmaschine besteht zwischen $i_{\varphi 1}{}^{s}$, $i_{\varphi 1}{}^{e}$ und dem magnetisierenden Strom $i_{\varphi 1}$ der Zusammenhang $i_{\varphi 1}{}^{e} = i_{\varphi 1} - i_{\varphi 1}{}^{s}$. Der Umrichter U und seine Steuerung speist dabei die Erregerwicklung mit einen Erregerstrom $i^e$.

Nachteilig beim Strommodell ist, daß die Modellparameter sehr genau auf die Maschinenparameter eingestellt werden müssen und daher sowohl bei stationären wie bei dynamischen Vorgängen z. B. eine temperaturbedingte Änderung des Läuferwiderstandes zu Fehlern bei der Ermittlung des Modellflusses führt. Da jedoch die Flußermittlung bei niedrigen Frequenzen trotz der bisweilen unbefriedigenden Dynamik noch genauer ist als beim Spannungsmodell, wird das Strommodell dem Spannungsmodell vorgezogen, wenn die Drehfeldmaschine im unteren Drehzahlbereich betrieben werden soll.

Der Erfindung liegt die Aufgabe zugrunde, eine Schaltungsanordnung anzugeben, die sowohl im unteren wie im oberen Drehzahlbereich ein elektrisches Spannungssignal bildet, das einer Flußkomponente des in einer Drehfeldmaschine auftretenden Flusses proportional ist und einen von der Maschinenfrequenz unabhängigen, möglichst geringen Phasen- und Amplitudenfehler aufweist. Dabei sollen die guten Eigenschaften der Vorrichtung nach der DE-PS 2 833 593 (Spannungsmodell) im oberen Drehzahlbereich beibehalten oder sogar noch verbessert werden.

Diese Aufgabe wird gemäß der Erfindung durch die im Anspruch 1 angegebenen Merkmale gelöst.

Die Erfindung stellt eine Kombination des Spannungsmodelles mit dem Strommodell dar. Der Nullpunktregler wird nicht mehr dazu eingesetzt, um langfristige Gleichanteile, die sowohl von einer Nullpunktdrift des Integrators wie von bei niedrigen Frequenzen auftretenden langsamen Änderungen des am Integratorausgang abzugreifenden Flusses hervorgerufen werden, auszuregeln, sondern es werden nur Gleichanteile in der Differenz des vom Spannungsmodell errechneten Wertes und des vom Strommodell errechneten Modellwertes unterdrückt.

Der Rückführungszweig des Spannungsmodell-Integrators bewirkt also, daß praktisch nur noch die Nullpunktdrift des Integrators ausgeregelt wird. Gleichzeitig wird als Folge der Frequenzgänge bei der Aufschaltung der beiden Modellschaltungen der Winkelfehler der Ausgangsgröße praktisch Null, unabhängig davon, wie stark die Driftregelung eingreift. Durch Variation der Eingriffsstärke kann vielmehr bestimmt werden, ob nun die Ausgangsgröße vorwiegend vom ursprünglichen Spannungsmodell oder vorwiegend vom Strommodell bestimmt wird. Die Eingriffsstärke, d. h. der Gewichtungsfaktor bei der Nullpunktregelung des Spannungsmodells nach der DE-PS 28 33 593 muß jetzt nicht mehr proportional zur Frequenz geführt werden, sondern kann entsprechend dem jeweiligen Bedürfnissen gewählt werden.

Der Nullpunktregler führt im niedrigen Frequenzbereich den Spannungsmodellwert dem Strommodellwert nach. Dadurch wird im unteren Frequenzbereich (einschließlich der Frequenz 0) die Ausgangsgröße vorwiegend vom Strommodell bestimmt. Die in diesem Frequenzbereich besonders günstigen Eigenschaften des Strommodelles bleiben also erhalten. Darüber hinaus wird die Dynamik sogar noch verbessert, da das Spannungsmodell mit seiner guten Dynamik als Vorsteuerung wirkt und bei schnellen Änderungen korrigierend eingreift.

Im oberen Frequenzbereich wird die Ausgangsgröße vorwiegend von dem in diesem Betriebsbereich günstigeren Spannungsmodell bestimmt, wobei der Winkelfehler des Spannungsmodells zusätzlich durch das Strommodell weitgehend kompensiert wird, ohne daß sich die Fehler des Strommodelles hier wesentlich bemerkbar machen.

Dabei ist es ferner von Vorteil, daß die Verstärkung der Driftregelung, d. h. der Faktor a < 1, viel höher als beim ursprünglichen Spannungsmodell gewählt werden kann. Dadurch ist in jedem Betriebsbereich ohne zusätzlichen Winkelfehler eine sehr gute Bedämpfung von Ober- und Unterschwingungen möglich. Auch kann abweichend von der DE-PS 28 33 593 der zweite Gewichtsfaktor, der dort gleich dem Quadrat des ersten Gewichtsfaktors zu wählen war, nun optimiert werden.

Möglichkeiten für die schaltungsmäßige Realisierung der Rechenmodellschaltung für das Strommodell sind eingangs bereits angegeben worden. Bevorzugt enthalten diese Modellschaltungen ein vom Magnetisierungsstrom (Asynchronmaschine) bzw. vom magnetisierenden Strom $i_{\varphi 1}$ (Synchronmaschine), insbesondere dessen Sollwert, beaufschlagtes, an das Zeitverhalten der Drehfeldmaschine angepaßtes Dynamikglied (Verzögerungsglied 1. Ordnung) zur Bildung eines Modellwertes für den Flußbetrag, eine Rechenstufe, der neben den Eingangsspannungen für Ständerstrom und gegebenenfalls magnetisierenden Strom auch der Modell-Flußbetrag des Dynamikgleides zugeführt ist und die daraus den Modellwinkel des Flusses bezüglich der Läuferachse ermittelt, ein Rechenglied, das den nunmehr durch Betrag und Winkel festgelegten Modellfluß in zwei Vektorkomponenten eines Koordinatensystems transformiert, das durch zwei bezüglich des Läufers der Drehfeldmaschine fest vorgegebenen Achsen gegeben ist, sowie einen Vektordreher, dem die Läuferstellung eingegeben ist und der aus den läuferbezogenen Koordinaten nunmehr ständerbezogene Koordinaten des Modellflußvektors ermittelt.

Bei einer Asynchronmaschine verbleibt bei gegebenem Magnetisierungsstrom (feldparallele Komponente des Ständerstromes) für die Beschreibung des Ständerstromes nur noch die zum Feldvektor senkrechte Komponente (Wirkstrom). Wird der Ständerstrom durch seine feldorientierten Koordinaten eingegeben, so können diese aus den ständerbezogenen Koordinaten mittels eines weiteren Vektordrehers ermittelt werden, dem die Winkellage des Flußvektors eingegeben ist. Diese Winkellage kann mittels eines Vektoranalysators aus den Ausgangsgrößen des Spannungsmodelles ermittelt werden, vorzugsweise werden jedoch die Ausgänge des Strommodelles benutzt. Bei den Komponenten des Stromvektors kann es sich um die Sollwerte handeln, bevorzugt werden jedoch die Istwerte benutzt.

Eine Synchronmaschine enthält neben der feldparallelen und der feldsenkrechten Komponente des Ständerstromes noch den Erregerstrom als weiteren Freiheitsgrad. Der magnetisierende Strom setzt sich dabei aus der feldparallelen Komponente des Ständerstromvektors und der feldparallelen Komponente des Erregerstromes zusammen, sofern von einer bei instationären Zuständen auftretenden entsprechenden Komponente des Dämpferstromes abgesehen werden kann. Daher wird bei Synchronmaschinen dem Strommodell neben den feldorientierten Koordinaten des Ständerstromes eine weitere Eingangsspannung zur Beschreibung des magnetisierenden Stromes, insbesondere für den Sollwert des magnetisierenden Stromes eingegeben. Aus der im Strommodell selbst errechneten läuferorientierten Winkellage des Flußvektors kann das Strommodell für eine Synchronmaschine aus dem Sollwert des magnetisierenden Stromes und der feldsenkrechten Komponente des Ständerstromes den Sollwert für den Erregerstrom ohne weiteren Aufwand berechnen, so daß für die Erregerstromsteuerung keine weitere Vorgaben nötig sind. Für einfache Steuerungen kann aber auch der Erregerstrom direkt vorgegeben (z. B. konstant) werden, so daß dann der Rechenmodellschaltung auch der Istwert des magnetisierenden Stromes, d. h. die Differenz der feldsenkrechten Komponente des Erreger-Iststromes und . der feldsenkrechten Ständerstromkomponente eingegeben werden können. Zur Eingabe des Ständerstromes können allgemein ständerbezogene oder feldorientierte Istwert- oder Sollwertkomponenten verwendet werden, wobei die Transformation vom Ständerbezugssystem ins feldorientierte Bezugssystem mittels Vektordrehern und Vektoranalysatoren erfolgen kann. Für einen feldorientierten Betrieb der Synchronmaschine ist die Eingabe feldorientierter Ständerstromkomponenten am einfachsten. Anstelle des Magnetisierungsstrom-Sollwertes kann auch ein Sollwert für den Flußbetrag selbst verwendet werden.

Anhand von zwei Ausführungsbeispielen für die Rechenmodellschaltungen, dreier Ausführungsbeispiele für entsprechende Drehfeldmaschinen-Antriebe und 8 Figuren wird die Erfindung näher erläutert.

Die Figuren zeigen :

Figur 1 zwei Wechselspannungsintegratoren IG und IG', denen gemäß der Erfindung die Ausgangssignale einer Rechenmodellschaltung 1 zugeführt sind,

Figur 2 die Frequenzgänge F1 und F2 des Wechselspannungsintegrator-Ausgangssignals für die am Integratoreingang und am Eingang des Nullpunktreglers zugeführten Signale,

Figur 3 die bevorzugte Frequenzabhängigkeit der Durchgriffsstärke (Gewichtsfaktor a) des Nullpunktreglers,

Figur 4 eine Rechenmodellschaltung (Strommodell) für den Einsatz bei einer Asynchronmaschine,

Figur 5 eine Rechenmodellschaltung (Strommodell) für den Einsatz bei einer Synchronmaschine,

Figur 6 eine Schaltungsanordnung zum Betrieb einer von einem Umrichter mit eingeprägtem Zwischenkreisstrom gespeisten Synchronmaschine (Stromrichtermotor),

Figur 7 eine Schaltungseinrichtung zum Betrieb einer von einem Direktumrichter gespeisten Synchronmaschine,

Figur 8 eine Schaltungsanordnung zum Betrieb einer von einem Umrichter mit eingeprägtem Zwischenkreisstrom gespeisten Asynchronmaschine.

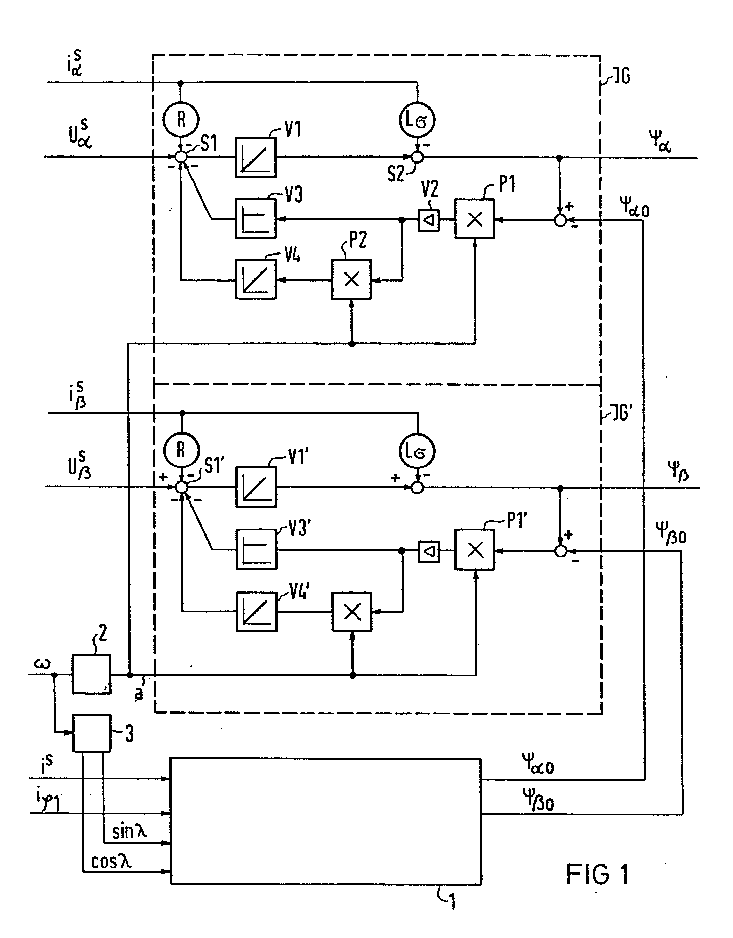

Gemäß Figur 1 sind den Eingängen der Wechselspannungsintegratoren IG, IG', wie sie in der deutschen Patentschrift 28 33 593 beschrieben sind, die Komponenten des Ständerstromvektors $i^s$ und des Spannungsvektors $U^s$ zugeführt, während am Ausgang die entsprechenden Komponenten des Flußvektors $\psi$ abgegriffen sind. Im folgenden werden die Indizes $\alpha$ und $\beta$ verwendet, um die Komponenten eines Vektors in einem ständerbezogenen, kartesischen Koordinatensystem zu bezeichnen. Der Wechselspannungsintegrator IG verarbeitet also die Projektionen $i_\alpha^s$ und $U_\alpha^s$ des Ständerstromvektors $i^s$ und des Spannungsvektors $U^s$ auf die $\alpha$-Achse des ständerbezogenen Koordinatensystems zu der entsprechenden Projektion $\psi_\alpha$ des Flußvektors $\psi$ auf dieselbe Achse, während der baugleiche zweite Wechselspannungsintegrator IG' die entsprechenden Projektionen $i_\beta^s$ und $U_\beta^s$ auf die $\beta$-Achse des ständerbezogenen Koordinatensystems zu der Flußkomponente $\psi_\beta$ in diesem Koordinatensystem verarbeitet.

Im Wechselspannungsintegrator IG ist einem ersten Summationspunkt S1 am Eingang eines Integrators V1 die Spannungskomponente $U_\alpha^s$ und gleichzeitig zur Kompensation des ohmschen Spannungsabfalls in der Maschine eine der Ständerstromkomponente $i_\alpha^s$ proportionale, mit dem Wert des ohmschen Ständerwiderstandes R multiplizierte Spannung negativ zugeführt. Am Eingang des Integrators V1 liegt dann eine der $\alpha$-Komponente des EMK-Vektors proportionale Spannung an. Um die Streuinduktivität der Drehfeldmaschine zu kompensieren, kann vorzugsweise einem zweiten Summationspunkt S2 dem Ausgangssignal des Verstärkers V1 ein der Stromkomponente $i_\alpha^s$ proportionales, um den Wert der Streuinduktivität $L_\sigma$ multipliziertes Signal negativ aufgeschaltet sein, so daß dadurch die entsprechende Komponente $\psi_\alpha$ des magnetischen Hauptflußvektors gebildet ist.

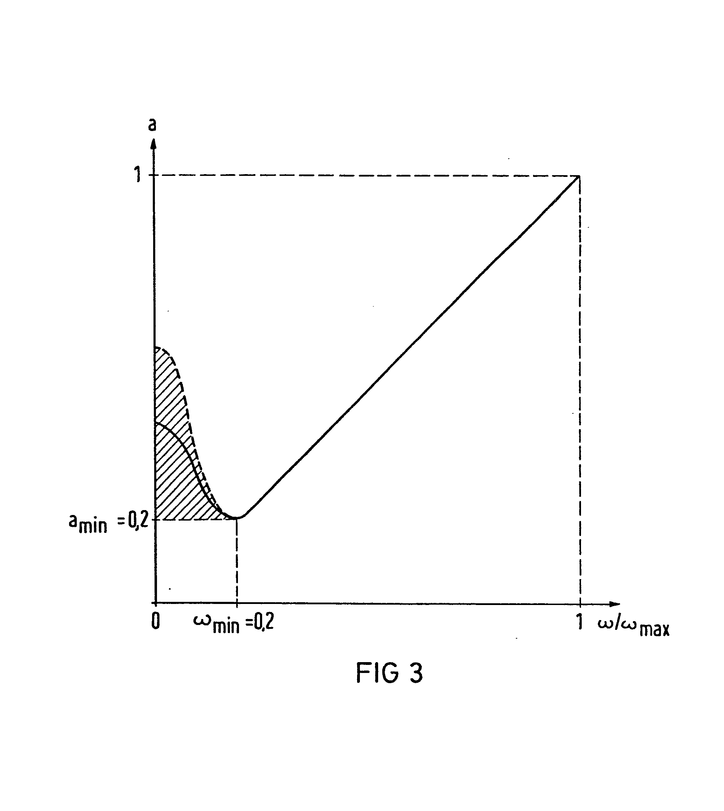

Zur Unterdrückung der Integrator-Nullpunktdrift ist das Ausgangssignal $\psi_\alpha$ über einen Proportionalverstärker V3 und parallel hierzu über einen Integralverstärker V4 jeweils unter Vorzeichenumkehr zum Summationspunkt S1 rückgeführt. Die Eingriffstärke für die Nullpunktdrift-Regelung kann vorteilhaft dadurch verändert werden, daß $\psi_\alpha$ dem Proportionalverstärker V3 proportional einem Gewichtungsfaktor a und dem Integralverstärker V4 proportional zu einem Gewichtungsfaktor b zugeführt wird. Gemäß der DE-PS 28 33 593 ist $b = a^2$ gewählt. Hierzu dienen die Multiplikationsglieder P1 und P2. Vorzugsweise geschieht die Multiplikation nach dem Prinzip der Pulsbreitenmultiplikation, indem die Multiplikatoreingangsspannung über einen Schalter, dessen Öffnungszeit/Schließzeit-Verhältnis (Tastverhältnis) entsprechend dem Multiplikationsfaktor a gewählt ist, aus den Multiplikatoraufgang gelegt wird. Der Mittelwert der am Multiplikatorausgang liegenden Spannung stellt dann das Produkt dar. Während der Integrator V4 auftrund seines Integrationsverhaltens selbst den Mittelwert bildet, muß für den Fall, daß der Multiplikator P1 durch einen entsprechend getasteten Schalter verwirklicht ist, ein als Glättungsglied ausgebildeter Verstärker V2 nachgeschaltet sein. Der Faktor a kann aus der Läuferfrequenz $\omega$ durch einen Funktionsgeber 2 gebildet werden, dessen eingegebene Funktion a $(\omega)$ im Zusammenhang mit Figur 3 noch erläutert wird. Bei Anwendung der Pulsbreitenmultiplikation enthält der Funktionsgeber 2 ferner einen Generator, der eine getastete Ausgangsspannung mit einem dem Faktor a entsprechenden Tastverhältnis liefert.

Gemäß der Erfindung ist nun am Eingang des von den Elementen P1, P2, V2, V3, V4 gebildeten Nullpunktreglers der Ausgangsgröße $\psi_\alpha$ des Wechselspannungsintegrators eine Größe $\psi_{\alpha 0}$ so aufgeschaltet, daß von dem Nullpunktregler nur Gleichanteile in der Differenz $\psi_\alpha - \psi_{\alpha 0}$ ausgeregelt werden. Entsprechend wird dem baugleichen Wechselspannungsintegrator IG' an einer dem Multiplizierer P1' vorgeschalteten Verknüpfungsstelle eine Größe $\psi_{\beta 0}$ negativ aufgeschaltet, so daß auch der Nullpunktregler dieses zweiten Wechselspannungsintegrators Gleichanteile in der Differenz $\psi_\beta - \psi_{\beta 0}$ ausregelt. Die Größen $\psi_{\alpha 0}$ und $\psi_{\beta 0}$ stellen die ständerbezogenen Komponenten eines Vektors dar, der in der Rechenmodellschaltung 1 als Modell für den Flußvektor der Maschine gebildet ist. Diese Rechenmodellschaltung bildet — ausgehend von den der Maschine zugeführten Strömen — in einem elektronischen Modell die Vorgänge nach, die in der Maschine zur Ausbildung des Flusses (genauer : des Läuferflusses) führen. Als weitere Eingangsinformation benötigt das Strommodell eine Angabe über die Lage (Winkel $\lambda$) der Läuferachse bzw. Polradachse im ständerbezogenen System. Dies kann z. B. durch einen von der Läuferfrequenz $\omega$ gespeisten, su Betriebsbeginn auf die richtige Ausgangsstellung gesetzten Sinus-Cosinus-Oszillator 3 geschehen, der entsprechende Spannungssignale cos $\lambda$ und sin $\lambda$ dem Strommodell 1 eingibt.

Ein ebener Vektor ist stets durch zwei Bezugsgrößen, z. B. Betrag und Winkellage oder die beiden Komponenten bezüglich eines gegebenen Koordinatensystems, bestimmt. Daher sind dem Strommodell zwei Eingangsgrößen zur Information über den Ständerstromvektor einzugeben. Bei entsprechender,

5

**0 043 973**

noch zu erläuternder Ausbildung der Rechenmodellschaltung kann als Bezugssystem ein ständerorientiertes oder ein feldorientiertes (d. h. mit dem Flußvektor umlaufendes) kartesisches Koordinatensystem oder auch ein Polarkoordinatensystem verwendet werden, da bei gegebenem Flußwinkel mittels Vektoranalysatoren, Vektordrehern oder polar/kartesischen Koordinatenwandlern jederzeit eine Umrechnung möglich ist.

Bei einer Synchronmaschine benötigt das Strommodell neben dem Ständerstromvektor noch eine Information über den magnetisierenden Strom $i_{\varphi 1}$. Da Rechenmodellschaltung und Wechselspannungsintegratoren die Lage des Flußvektors selbst ermitteln und außerdem die Läuferstellung (und somit die Richtung des Erregerstromes) eingegeben ist, ist z. B. durch den Betrag des Erregerstromes $i^e$ gemäß dem Zusammenhang $i_{\varphi 1} = i_{\varphi 1}^e + i_{\varphi 1}^s$ der magnetisierende Strom festgelegt. Bei einer Asynchronmaschine entfällt der Erregerstrom und der magnetisierende Strom $i_{\varphi 1}$ ist mit dem feldparallelen Anteil $i_{\varphi 1}^s$ des Ständerstromvektors identisch. Im folgenden werden die Indizes $\varphi 1$ und $\varphi 2$ benutzt, um in einem feldorientierten Koordinatensystem die zum Flußvektor parallele Komponente ($\varphi 1$) und die dazu senkrechte Komponente ($\varphi 2$) zu bezeichnen.

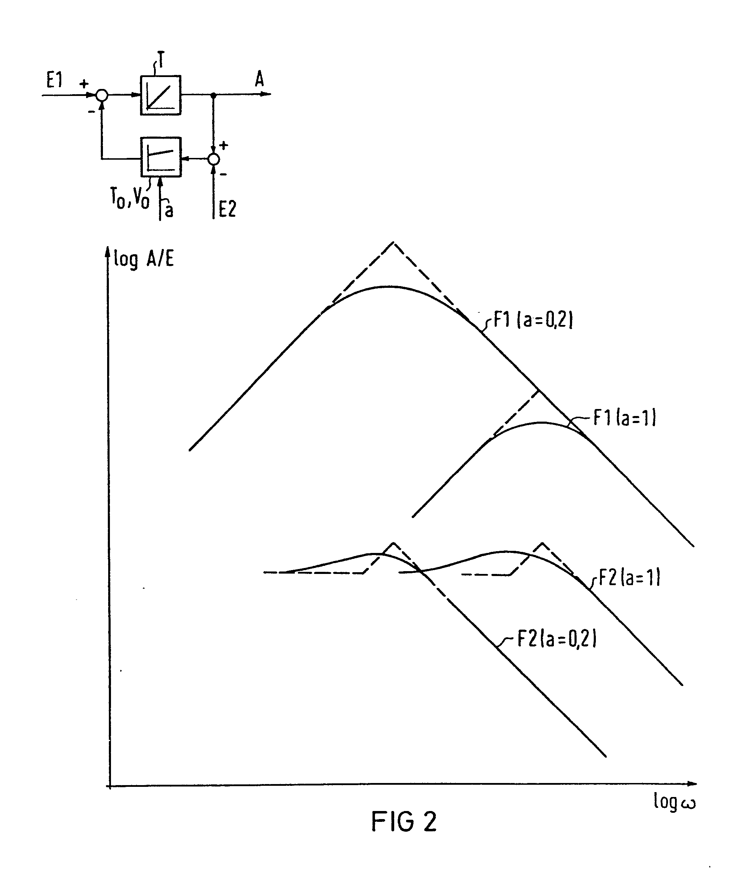

In Figur 2 ist oben die Struktur eines Wechselstromintegrators angegeben, wobei der Integrator V1 durch einen Integrator der Zeitkonstanten T und der Nullpunktregler durch einen PI-Regler der Zeitkonstanten $T_0$ und der Verstärkung $V_0$ symbolisiert ist. Durch den Gewichtsfaktor a kann die Eigenfrequenz verstellt werden. Es ergeben sich dabei für die beiden Eingänge E1 und E2 Frequenzgänge, die in Figur 2 für zwei verschiedene Parameterwerte a = 1 und a = 0,2 dargestellt sind und für die gilt

$$F_1 = \frac{A}{E_1} = \frac{pT_0}{1 + pT_0 V_0 + p^2 TT_0}$$

$$F_2 = \frac{A}{E_2} = \frac{1 + pT_0 V_0}{1 + pT_0 V_0 + p^2 TT_0} \, .$$

Wird nun dem Eingang E1 die EMK der Maschine eingegeben (EMK = p.T. $\psi$) und dem Eingang E2 der vom Strommodell errechnete Modellfluß $\psi_0$, so ergibt sich für das Signal am Ausgang A

$$A = E_1 F_1 + E_2 F_2 = \psi \, ,$$

sofern das Strommodell genau auf die Maschine abgestimmt ist ($\psi = \psi_0$). Überraschenderweise ergibt sich also durch die erfindungsgemäße Verwendung des Strommodelles, daß nun zumindest theoretisch der durch die Kombination « Spannungsmodell/Strommodell » ermittelte Fluß keinen Winkelfehler mehr aufweist. Insbesondere ist der ermittelte Fluß unabhängig von der durch den Faktor a veränderbaren Dämpfung. Es muß also jetzt (abweichend von den deutschen Patentschriften 28 33 542 und 28 33 593) die Gewichtung a nicht mehr proportional der Frequenz geführt werden, vielmehr kann der Gewichtungsfaktor a und somit die Eingriffsstärke der Nullpunktregelung optimal auf die jeweilige Frequenz abgestimmt werden. In Figur 3 ist gezeigt, welche Funktion a ($\omega$) vorteilhaft dem Funktionsgeber 2 eingegeben werden kann. Diese Funktion steigt von einem im unteren Drehzahlbereich liegenden Minimalwert $a_{min}$ proportional zur Frequenz bis zum Wert 1 bei maximaler Frequenz an. In besonderen Fällen kann für $\omega < \omega_{min}$ auch ein im strichlierten Bereich liegender anderer Funktionsverlauf vorteilhaft sein. Auch müssen den I-Reglern V4, V4' die Differenzen $\psi_\alpha - \psi_{\alpha 0}$, $\psi_\beta - \psi_{\beta 0}$ nicht mit dem Gewichtsfaktor $a^2$ eingegeben werden, es kann auch ein anderer Gewichtsfaktor benutzt werden.

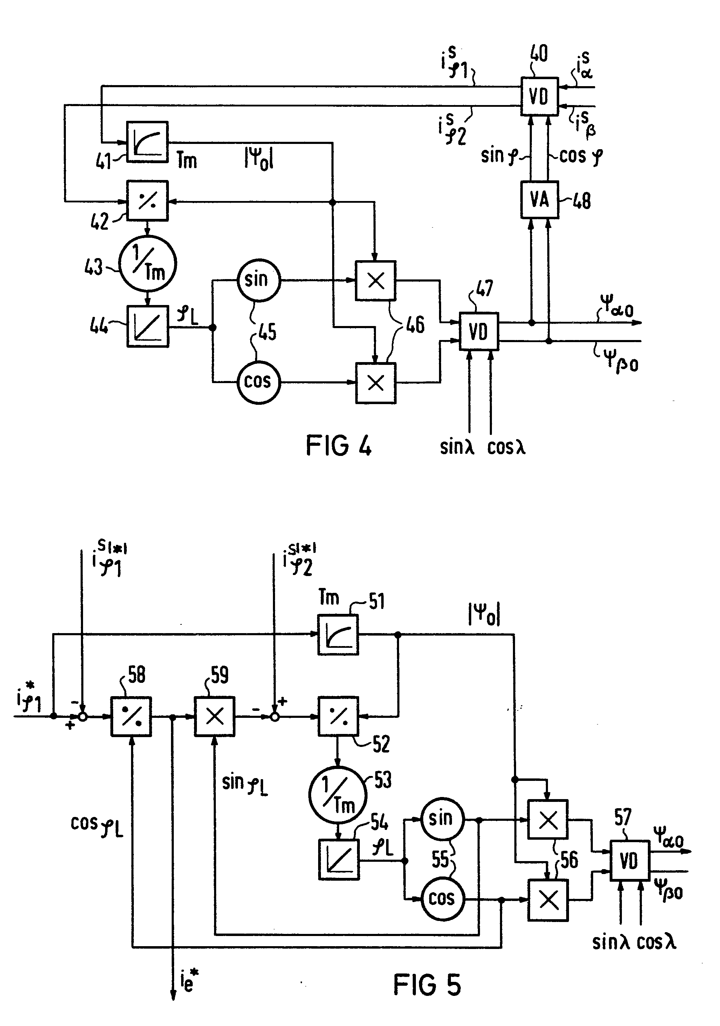

In Figur 4 ist für die Verwendung bei einer Asynchronmaschine ein Beispiel für den Aufbau einer Rechenmodellschaltung gegeben. Vorzugsweise wird bei einer Asynchronmaschine der Ständerstrom durch seine Istwerte eingegeben. Die Umrechnung von ständerbezogenen Ständerstromkomponenten $i_\alpha^s$, $i_\beta^s$ auf feldorientierte Komponenten $i_{\varphi 1}^s$ und $i_{\varphi 2}^s$ geschieht mittels eines Vektordrehers 40, dem der Winkel $\varphi$ zwischen Flußvektor und $\alpha$-Achse des Ständerbezugssystems durch entsprechende Spannungen sin $\varphi$, cos $\varphi$ eingegeben ist. Die feldparallele Komponente $i_{\varphi 1}^s$ (Magnetisierungsstrom) wird einem Dynamikglied 41 eingegeben, z. B. einem Glättungsglied mit der auf das Verhalten der Asynchronmaschine abgestimmten Zeitkonstanten Tm, dessen Ausgangssignal $\psi_0$ den Betrag des sich in der Maschine bei gegebenen Magnetisierungsstrom einstellenden Flußvektors angibt (Tm ist hierbei als Quotient von Hauptinduktivität und Läuferwiderstand der Maschine gegeben). Mit den Baugliedern 42, 43 und 44 wird aus der feldsenkrechten Komponente $i_{\varphi 2}$ (Wirkstrom) durch Division mit dem Flußbetrag und der Zeitkonstanten die sich bei gegebenen Wirkstrom $i_{\varphi 1}$ einstellende Änderung des Winkels zwischen Feldachse und Läuferachse (d. h. die Schlupffrequenz) ermittelt, aus der sich der Winkel $\varphi_L$ durch Integration ergibt. Mittels Winkelfunktionsgeneratoren 45 und Multiplikatoren 46 können daraus die läuferbezogenen Komponenten $\psi_0 \cdot \sin \varphi_L$ und $\psi_0 \cdot \cos \varphi_L$ des Modellflusses nun im Vektordreher 47 entsprechend der bereits erwähnten Läuferstellungseingabe zu den ständerbezogenen Komponenten $\psi_{\alpha 0}$ und $\psi_{\beta 0}$ des Modellflusses umgerechnet werden. Aus diesem Modellflußvektor bildet der Vektoranalysator 48 die Winkelstellung (sin $\varphi$, cos $\varphi$) des Flußvektors im Ständersystem, die zur Eingabe in den Vektordreher 40 benötigt wird.

6

Prinzipiell können anstelle der Ständerstromistwerte $i_\alpha{}^s$, $i_\beta{}^s$ bzw. $i_{\varphi 1}{}^s$ und $i_{\varphi 2}{}^s$ auch entsprechende Sollwerte verwendet werden und der Vektoranalysator 48 kann anstelle der Modellflußkomponenten $\psi_{\alpha 0}$, $\psi_{\beta 0}$ auch die Ausgangsgrößen $\psi_\alpha$, $\psi_\beta$ des Wechselspannungsintegrators selbst benutzen. Diese Möglichkeit hat jedoch den Nachteil, daß bei einer Asynchronmaschine dann die Gefahr besteht, daß sich im Laufe des Betriebs Strommodell und Spannungsmodell voneinander entfernen.

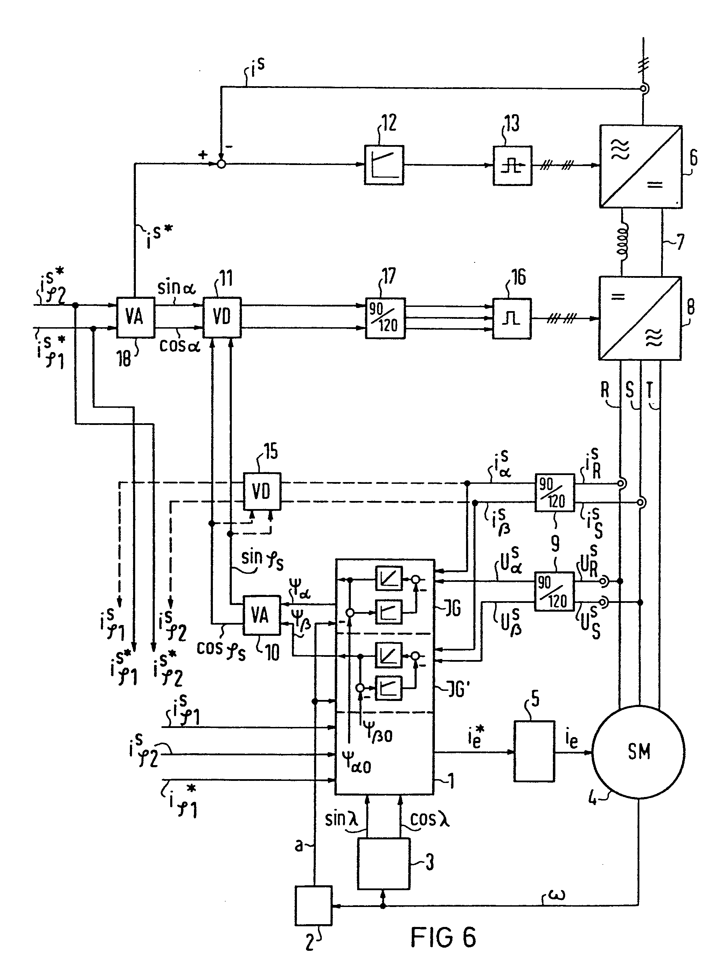

Bei dem in Figur 5 als Beispiel für ein Strommodell einer Synchronmaschine gezeigten Schaltung hingegen können die Sollwerte $i_{\varphi 1}{}^{s*}$, $i_{\varphi 2}{}^{s*}$ anstelle der Istwerte ohne weitere Nachteile verwendet werden. Sofern der Ständerstrom im Ständerbezugssystem vorgegeben ist, kann den entsprechenden Eingängen ein Vektordreher entsprechend dem Vektordreher 40 in Figur 4 vorgeschaltet werden. Hier wird analog aus dem magnetisierenden Strom $i_{\varphi 1}$, der vorzugsweise als Sollwert eingegeben wird, mittels eines Dynamikgliedes 51 der Modellflußbetrag $\psi_0$ gebildet. Abweichend von Figur 4 kann dem dem Dividierer 42 entsprechenden Dividierer 52 zur Bildung der Winkeländerung $\dot{\varphi}_L$ bzw. des Winkels $\varphi_L$ zwischen Läuferachse und Feldachse nicht die feldsenkrechte Ständerstromkomponente direkt aufgeschaltet werden, vielmehr muß der Dämpferstrom berücksichtigt werden. Hierzu dient die Aufschaltung von $i_{\varphi 1}$ und $i_{\varphi 1}{}^s$, der Dividierer 58 und der Multiplizierer 59, wobei zwischen dem Dividiererausgang und dem Multiplizierereingang der Sollwert $i_e{}^*$ des Erregerstromes gebildet wird. Dieser Sollwert kann direkt zur Steuerung der Erregerstromeinspeisung verwendet werden, ohne daß hierzu weitere Informationen benötigt würden. Die Bildung des Modellflußvektors in einem läuferbezogenen Bezugssystem mittels der Elemente 55 und 56 und in einem ständerbezogenen Bezugssystem mittels des Vektordrehers 57 erfolgt analog zu Figur 4.

Die soeben beschriebene Rechenmodellschaltung 1 sowie die im Zusammenhang mit Figur 1 erläuterten Wechselspannungsintegratoren IG und IG', der Funktionsgeber 2 und die Oszillatorschaltung 3 sind nach Figur 6 bei einer Schaltungsanordnung zum Betrieb einer Synchronmaschine 4 eingesetzt. Die Einspeisung des Erregerstroms geschieht mittels einer Einspeiseeinrichtung 5, die Ständerwicklungen der Synchronmaschine werden durch einen Umrichter mit eingeprägtem Zwischenkreisstrom gespeist, bestehend aus dem netzgeführten Gleichrichter 6, dem Zwischenkreis 7 und dem selbstgeführten Wechselrichter 8. Die in den Wechselrichterausgängen R, S fließenden Ströme $i_R{}^s$ und $i_S{}^s$ sowie die in diesen Leitungen auftretenden Spannungen $U_R{}^s$ und $U_S{}^s$ stellen die Komponenten des Ständerstromvektors $i^s$ und des Spannungsvektors $U^s$ in einem ständerbezogenen Koordinatensystem dar, das von den entsprechenden, einen Winkel von 120° einschließenden Wicklungsachsen der Synchronmaschine aufgespannt wird. Mittels Koordinatenwandlern 9 werden daraus die entsprechenden Komponenten $i_\alpha{}^s$, $i_\beta{}^s$, $U_\alpha{}^s$, $U_\beta{}^s$ in einem kartesischen Ständerbezugssystem gebildet, die den Eingängen der Wechselspannungsintegratoren zugeführt werden. Die Innenschaltung der Wechselspannungsintegratoren, in denen durch Integration der EMK die entsprechenden ständerbezogenen Flußkomponenten $\psi_\alpha$, $\psi_\beta$ gebildet werden, sowie die Nullpunktregler, die Gleichanteile in den Differenzen $\varphi_\alpha - \psi_{\alpha 0}$, $\psi_\beta - \psi_{\beta 0}$ ausregeln, sind nur schematisch dargestellt. Aus den Wechselspannungsintegrator-Ausgangsgrößen $\psi_\alpha$, $\psi_\beta$ ermittelt ein Vektoranalysator 10 die Winkellage (sin $\varphi_S$, cos $\varphi_S$) des Magnetflußvektors im kartesischen Ständerbezugssystem als Drehwinkel eines Vektordrehers und schaltet diesem die entsprechenden Signale auf.

Zur Steuerung der Synchronmaschine wird der Betrag $i^s$ des Ständerstrom-Istwertes zusammen mit einem entsprechenden Sollwert $i^{s*}$ dem Eingang eines Stromreglers 12 aufgeschaltet, der die Steuerspannung für den Steuersatz 13 des Gleichrichters 6 liefert. Die Synchronmaschine wird feldorientiert betrieben, indem zur Bestimmung des Ständerstromsollwertes noch der Sollwinkel zwischen Ständerstromvektor und Flußvektor bzw. der dazu um 90° verschobene Winkel $\alpha$ (Steuerwinkel) zwischen Soll-Ständerstrom und EMK-Vektor vorgegeben wird.

Hierzu werden einem weiteren Vektoranalysator 18 der Sollwert $i_{\varphi 2}{}^{s*}$ der feldsenkrechten Ständerstromkomponente, der z. B. von einem Drehmomentregler abgegriffen ist, und der Sollwert $i_{\varphi 1}{}^{s*}$ der feldparallelen Ständerstromkomponente, der z. B. von einem Blindleistungsregler geliefert ist, eingegeben. Der Vektoranalysator liefert neben dem für den Stromregler 12 benötigten Sollwert $i^{s*}$ des Ständerstrombetrages die Winkelfunktionen des Steuerwinkels $\alpha$ im feldorientierten Koordinatensystem, die im Vektordreher 11 in die ständerbezogenen kartesischen Komponenten eines Steuervektors für den Steuersatz 16 des Wechselrichters 8, wobei noch mittels eines Koordinatenwandlers 17 der Übergang von kartesischen Koordinaten auf die drei gegeneinander um 120° versetzten Ständerwicklungsachsen vollzogen wird.

Der Rechenmodellschaltung sind der Sollwert $i_{\varphi 1}{}^*$ des magnetisierenden Stromes sowie die Komponenten-Sollwerte $i_{\varphi 1}{}^{s*}$, $i_{\varphi 2}{}^{s*}$ eingegeben. Es können aber auch die entsprechenden Ständerstrom-Istwerte eingegeben werden, wenn entsprechend den gestrichelt gezeigten Leitungen die Ständerstrom-Istwerte $i_\alpha{}^s$, $i_\beta{}^s$ über einen Vektordreher 15, dem die im Vektoranalysator 10 ermittelte Lage des Flußvektors eingegeben ist, in die entsprechenden feldorientierten Komponenten überführt werden.

Figur 6 entspricht mit Ausnahme der Rechenmodellschaltung 1 im wesentlichen Figur 3 der deutschen Patentschrift 28 33 542. Abweichend sind dort den Wechselspannungsintegratoren direkt die Komponenten $i_R{}^s$, $i_S{}^s$, $U_R{}^s$, $U_S{}^s$ zugeführt, so daß die Wechselspannungsintegratoren die Flußkomponenten ebenfalls in dem von den Ständerachsen aufgespannten 120°-Bezugssystem liefern und mittels eines nachgeschalteten, den Koordinatenwandlern 9 entsprechenden Koordinatenwandler umgerechnet werden. Eine derartige Anordnung ist auch nach Figur 6 möglich, sofern die von der Rechenmodellschaltung im kartesischen System gelieferten Flußkomponenten $\psi_{\alpha0}$, $\psi_{\beta0}$ vor ihrer Eingabe in die Nullpunktregler der Wechselspannungsintegratoren durch einen 120°/90°-Koordinatenwandler in dieses 120°-Bezugssystem umgerechnet werden.

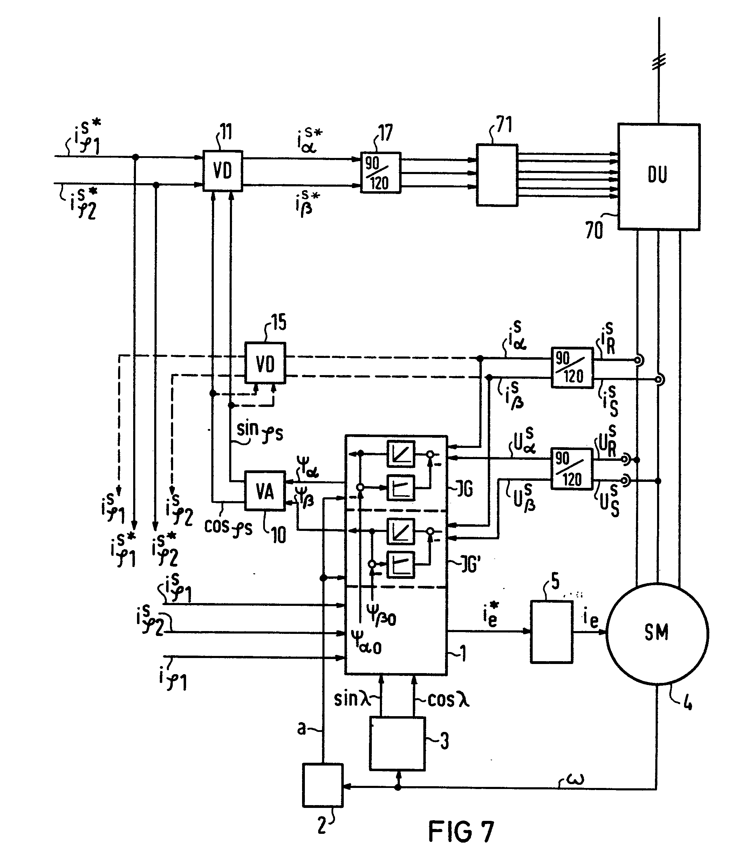

Figur 7 zeigt eine Anordnung zum Betrieb einer Synchronmaschine, die von einem Direktumrichter 70 gespeist wird. Abweichend von Figur 6 werden dem Vektordreher 11 die Sollwerte für die feldorientierten Ständerstromkomponenten direkt eingegeben. Am Ausgang dieses Vektordrehers stehen die Komponentensollwerte $i_\alpha{}^{s*}$, $i_\beta{}^{s*}$ im kartesischen Ständerbezugssystem an und werden durch den Koordinatenwandler 17 in die entsprechenden Eingaben für die Direktumrichtersteuerung 71 umgewandelt.

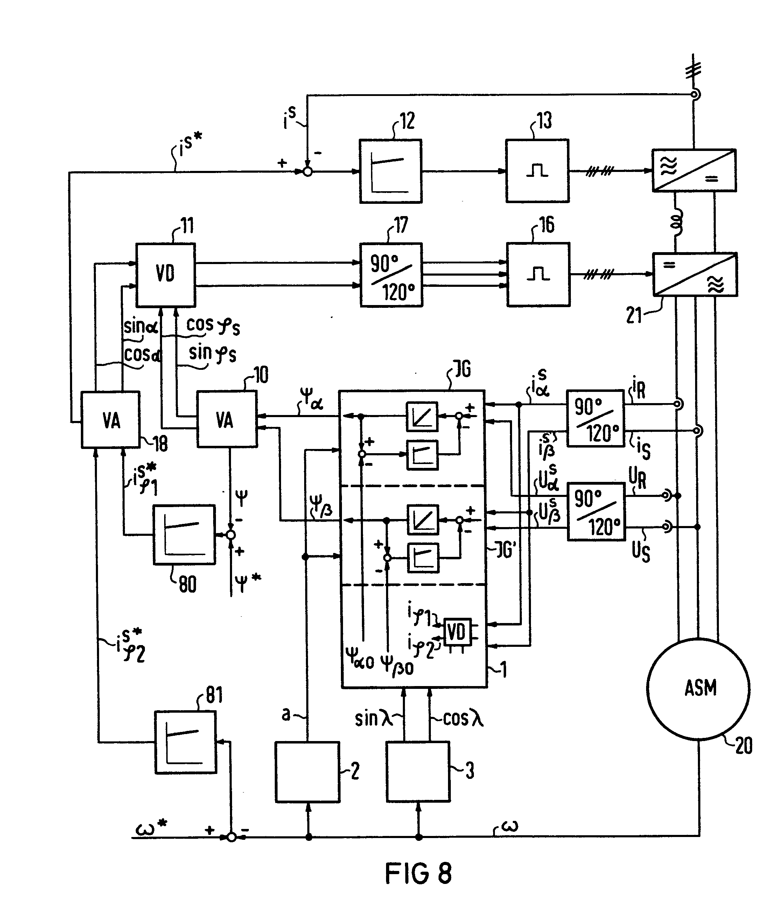

Als Beispiel für eine feldorientierte Regelung einer Asynchronmaschine ist in Figur 8 eine Asynchronmaschine 20 dargestellt, die von einem Stromzwischenkreisumrichter gespeist wird, dessen Wechselrichter 21 vorzugsweise auf Phasenfolgelöschung eingerichtet ist. Da dabei im wesentlichen die in Figur 6 bereits beschriebenen Elemente verwendet sind, sei hier nur darauf hingewiesen, daß im Unterschied zu Figur 6 als Eingangsgrößen für die Rechenmodellschaltung 1, deren Innenaufbau Figur 4 entspricht, die kartesischen, ständerbezogenen Stromkomponenten verwendet sind, um das Strommodell enger an die Asynchronmaschine zu koppeln. Generell entfällt bei einer Asynchronmaschine die Eingabe einer weiteren Information für den magnetisierenden Strom. Die Regelung der Asynchronmaschine ist vervollständigt durch einen Flußregler 80, der durch Vergleich des am Vektoranalysator 10 abgegriffenen Betrages $\psi$ des Flußvektors mit einem Fluß-Sollwert $\psi^*$ den Sollwert für die feldparallele Komponente $i_{\varphi1}{}^{s*}$ des Ständerstromvektors liefert, und einen Drehzahlregler 81, der den Sollwert $i_{\varphi2}{}^{s*}$ der feldsenkrechten Ständerstromkomponente der Differenz eines Drehzalsollwertes $\omega^*$ und der gemessenen Ist-Drehzahl $\omega$ nachführt. Natürlich ist auch eine Drehmomentregelung zur Bildung von $i_{\varphi2}{}^{s*}$ möglich.

Die Verwendung der hier nicht näher erläuterten Vektordreher, Vektoranalysatoren und Koordinatenwandler ist im einzelnen bereits in der deutschen Patentschrift 28 33 542 angegeben.

**Ansprüche**

1. Drehfeldmaschinenantrieb mit
   a) einem Umrichter (21),
   b) einer vom Umrichter gespeisten Drehfeldmaschine (20),
   c) zwei Wechselspannungsintegratoren (IG, IG′), jeweils enthaltend einen Integrator, deren Eingängen aus Ständerstrom (Komponenten $i_\alpha{}^s$, $i_\beta{}^s$) und Ständerspannung ($U_\alpha{}^s$, $U_\beta{}^s$) gebildete Komponenten des EMK-Vektors der Maschine zugeführt und an deren Ausgängen die entsprechende Komponente ($\psi_\alpha$, $\psi_\beta$) des Magnetflußvektors der Maschine abgegriffen sind, eine den jeweiligen Integratorausgang mit dem zugehörigen Integratoreingang verbindende Rückführungsleitung und einen Nullpunktregler in der Rückführungsleitung, und
   d) einer mit den Ausgängen der Wechselspannungsintegratoren (IG, IG′) verbundenen Umrichtersteuerung (10-13, 16, 17), der Sollwerte ($i^{s*}$, sin $\alpha$, cos $\alpha$) für eine Steuerung der zum Flußvektor (Komponenten $\psi_\alpha$, $\psi_\beta$) parallelen und der dazu senkrechten Komponente des Ständerstromes eingegeben sind,
   gekennzeichnet durch
   e) eine von dem Ständerstrom ($i_{\varphi1}{}^s$, $i_{\varphi2}{}^s$) und der Läuferstellung (sin $\lambda$, cos $\lambda$), sowie bei einer Synchronmaschine von magnetisierenden Strom ($i_{\varphi1}$) entsprechenden Spannungen beaufschlagte Rechenmodellschaltung (1), die — von den Strömen ausgehend — die zur Ausbildung des Maschinenflusses führenden Vorgänge rechnerisch nachbildet und mittels der Läuferstellung Modellgrößen ($\psi_{\alpha0}$, $\psi_{\beta0}$) für die Flußkomponenten ermittelt, und
   f) eine derartige Aufschaltung der Flußkomponenten-Modellgrößen ($\psi_{\alpha0}$, $\psi_{\beta0}$) auf die Eingänge der Nullpunktregler, daß jeder Nullpunktregler einen Gleichanteil in der Differenz ($\psi_\alpha - \psi_{\alpha0}$ bzw. $\psi_\beta - \psi_{\beta0}$) der am zugeordneten Wechselspannungsintegrator (IG bzw. IG′) ermittelten Flußkomponente ($\psi_\alpha$ bzw. $\psi_\beta$) und der Modellgröße ($\psi_{\alpha0}$ bzw. $\psi_{\beta0}$) für diese Flußkomponente ausregelt (Figur 8).

2. Drehfeldmaschinenantrieb nach Anspruch 1, dadurch gekennzeichnet, daß jeder Nullpunktregler einen p-Regler, dem die Differenz ($\psi_\alpha - \psi_{\alpha0}$ bzw. $\psi_\beta - \psi_{\beta0}$) proportional zu einem Gewichtsfaktor (a) zugeführt ist, und einen I-Regler, dem die Differenz proportional zu einem zweiten Gewichtsfaktor ($b = a^2$) zugeführt ist, sowie einen Summationspunkt (S1) für die Reglerausgänge am Integratoreingang enthält (Fig. 1).

3. Drehfeldmaschinenantrieb nach Anspruch 1 oder 2, dadurch gekennzeichnet, daß die Rechenmodellschaltung ein Dynamikglied (41, 51) zum Nachbilden des Flusses aus der feldparallelen Ständerstromkomponente ($i_{\varphi1}{}^s$, Fig. 4) bei Asynchronmaschinen, bzw. dem magnetisierenden Strom ($i_{\varphi1}$, Fig. 5) bei Synchronmaschinen in einem läuferbezogenen Koordinatensystem sowie einen von der Läuferstellungseingabe (sin $\lambda$, cos $\lambda$) beaufschlagten Vektordreher (47, 57) zur Bildung der ständerbezogenen Modellflußkomponente ($\psi_{\alpha0}$) enthält (Fig. 4, Fig. 5).

4. Drehfeldmaschinenantrieb nach Anspruch 3, dadurch gekennzeichnet, daß das Dynamikglied (41, 51) von der dem Magnetisierungsstrom entsprechenden Ständerstrom-Komponente ($i_{\varphi1}{}^s$) bzw. dem

magnetisierenden Strom ($i_{\varphi 1}^{(*)}$) beaufschlagt ist und einen Modell-Flußbetrag ($|\psi_0|$) ermittelt, und daß eine Rechenstufe (42, 43, 44 ; 52, 53, 54), der der Modell-Flußbetrag sowie mindestens die feldsenkrechte Ständerstromkomponente ($i_{\varphi 2}^{s}$) zugeführt ist und die den Modellwinkel ($\varphi_L$) des Flusses bezüglich der Läuferachse ermittelt, und ein nachgeschaltetes Rechenglied (45, 46 ; 55, 56) vorgesehen ist, das aus dem Modellwinkel ($\varphi_L$) und dem Modell-Flußbetrag ($|\psi_0|$) die Komponenten des Modellflusses in einem läuferbezogenen Bezugssystem berechnet (Fig. 4, Fig. 5).

5. Drehfeldmaschinenantrieb nach Anspruch 4, dadurch gekennzeichnet, daß die Rechenstufe (42, 43, 44 ; 52, 53, 54) den Modellwinkel durch Integration der aus der feldsenkrechten Ständerstromkomponente ($i_{\varphi 2}^{s}$) und dem Modell-Flußbetrag ($|\psi_0|$) ermittelten Schlupffrequenz bildet (Fig. 4, 5).

6. Drehfeldmaschinenantrieb nach einem der Ansprüche 3 bis 5 unter Verwendung einer Asynchronmaschine, dadurch gekennzeichnet, daß zur Beschreibung des Ständerstromes und des Magnetisierungsstromes die feldorientierten Koordinaten des Ständerstromes in die Rechenmodellschaltung eingegeben sind.

7. Drehfeldmaschinenantrieb nach Anspruch 6, dadurch gekennzeichnet, daß die feldorientierten Komponenten des Ständerstromes aus den Istwert-Komponenten des Ständerstromvektors in einem ständerbezogenen Koordinatensystem mittels eines weiteren Vektordrehers (40) gebildet werden, dem über einen mit dem Ausgang der Rechenmodellschaltung verbundenen Vektoranalysator (48) die Winkellage ($\sin \varphi$, $\cos \varphi$) des Modellflußvektors im ständerbezogenen Bezugssystem eingegeben ist (Fig. 4).

8. Drehfeldmaschinenantrieb nach einem der Ansprüche 3 bis 5 unter Verwendung einer Synchronmaschine, dadurch gekennzeichnet, daß der Rechenmodellschaltung als dem magnetisierenden Strom entsprechende Spannung der Sollwert des Betrages des magnetisierenden Stromes und als dem Ständerstrom entsprechende Spannungen die feldorientierten Komponenten des Ständerstromes eingegeben sind.

## Claims

1. A rotating field machine drive with
   a) an inverter (21),
   b) a rotating field machine (20) fed by the inverter,
   c) two a. c. voltage integrators (IG, IG′) each containing an integrator, whose inputs are supplied with components formed from stator current (components $i_\alpha^{s}$, $i_\beta^{s}$) and stator voltage ($U_\alpha^{s}$, $U_\beta^{s}$) of the EMF-vectors of the machine, and from whose outputs the corresponding components ($\psi_\alpha$, $\psi_\beta$) of the magnetic flux vectors of the machine are tapped, further containing a return line which connects the integrator output in question to the associated integrator input and a zero regulator in the return line, and
   d) an inverter control unit (10-13, 16, 17) which is connected to the outputs of the a. c. voltage integrators (IG, IG′) and into which are input theoretical values ($i^{s*}$, $\sin \alpha$, $\cos \alpha$) for the control of those components of the stator current which are parallel to the flux vector (components $\psi_\alpha$, $\psi_\beta$) and the components at right angles thereto,
   characterised by
   e) a computer model circuit (1) acted upon by voltages corresponding to the stator current ($i_{\varphi 1}^{s}$, $i_{\varphi 2}^{s}$) and the rotor position ($\sin \lambda$, $\cos \lambda$), and — in case of a synchronous machine — the magnetising current ($i_{\varphi 1}$), and which computer model circuit — on the basis of the currents — simulates by computation the processes which lead to the formation of the machine flux and by means of the rotor setting determines model values ($\psi_{\alpha 0}$, $\psi_{\beta 0}$) for the flux components, and
   f) a connection of the flux component model values ($\psi_{\alpha 0}$, $\psi_{\beta 0}$) to the inputs of the zero regulators such that each zero regulator regulates an identical component in the difference ($\psi_\alpha - \psi_{\alpha 0}$ or $\psi_\beta - \psi_{\beta 0}$ as the case may be) between the flux component ($\psi_\alpha$, $\psi_\beta$) determined in the assigned a. c. voltage integrator (IG or IG′ as the case may be) and the model value ($\psi_{\alpha 0}$ or $\psi_{\beta 0}$ as the case may be) for this flux component (Fig. 8).

2. A rotating field machine drive as claimed in Claim 1, characterised in that each zero regulator contains a p-regulator which is supplied with the difference ($\psi_\alpha - \psi_{\alpha 0}$ or $\psi_\beta - \psi_{\beta 0}$ as the case may be) proportional to a weight factor (a), and contains a l-regulator which is supplied with the difference proportional to a second weight factor ($b = a^2$) and further contains a summation point (S1) for the regulator outputs at the integrator input (Fig. 1).

3. A rotating field machine drive as claimed in Claim 1 or 2, characterised in that the computer model circuit contains a dynamic element (41, 51) for the simulation of the flux from the field-parallel stator current component ($i_{\varphi 1}^{s}$, Fig. 4) in the case of asynchronous machines, or the magnetising current ($i_{\varphi 1}$, Fig. 5) in the case of synchronous machines in a rotor-related coordinate system, and further contains a vector rotator (47, 57), fed from the rotor position input ($\sin \lambda$, $\cos \lambda$), for the formation of the stator-related model flux component ($\psi_{\alpha 0}$) (Fig. 4, Fig. 5).

4. A rotating field machine drive as claimed in Claim 3, characterised in that the dynamic element (41, 51) is supplied with the stator current component ($i_{\varphi 1}^{s}$) corresponding to the magnetisation current or with the magnetising current ($i_{\varphi 1}^{(*)}$) as the case may be, and determines a model flux quantity ($|\psi_0|$),

and that a calculating stage (42, 43, 44 ; 52, 53, 54) is provided which is supplied with the model flux amount and at least the field-perpendicular stator current component ($i_{\varphi 2}{}^s$) and which determines the model angle ($\varphi_L$) of the flux relative to the rotor axis, and a following calculating element (45, 46 ; 55, 56) is likewise provided which calculates from the model angle ($\varphi_L$) and the model flux quantity ($|\psi_0|$) the components of the model flux in a rotor-related reference system (Fig. 4, Fig. 5).

5. A rotating field machine drive as claimed in Claim 4, characterised in that the calculating stage (42, 43, 44 ; 52, 53, 54) forms the model angle by the integration of the slip frequency determined from the field-perpendicular stator current component ($i_{\varphi 2}{}^s$) and the model flux quantity ($|\psi_0|$) (Fig. 4, 5).

6. A rotating field machine drive as claimed in one of Claims 3 to 5 using an asynchronous machine, characterised in that for the specification of the stator current and the magnetising current the field-orientated coordinates of the stator current are input into the computer model circuit.

7. A rotating field machine drive as claimed in Claim 6, characterised in that the field-orientated components of the stator current are formed from the actual-value components of the stator current vector in a stator-related coordinate system by means of a further vector rotator (40) into which, via a vector analyser (48) connected to the output of the computer model circuit, there is input the angular position (sin $\varphi$, cos $\varphi$) of the model flux vector in the stator-related reference system (Fig. 4).

8. A rotating field machine drive as claimed in one of Claims 3 to 5 using a synchronous machine, characterised in that the theoretical value of the amount of the magnetising current is input into the computer model circuit as the voltage corresponding to the magnetising current, and the field-orientated components of the stator current are input as the voltages corresponding to the stator current.

**Revendications**

1. Dispositif d'entraînement de machine à champ tournant comportant :
    a) un convertisseur de fréquence (21),
    b) une machine à champ tournant (20) alimentée par le convertisseur de fréquence,
    c) deux intégrateurs de tension alternative (IG, IG') constitués chacun par un intégrateur aux entrées duquel sont envoyées les composantes du vecteur de la force électromotrice de la machine, formées à partir du courant statorique (composantes $i_\alpha{}^s$, $i_\beta{}^s$) et de la tension statorique ($U_\alpha{}^s$, $U_\beta{}^s$), et sur les sorties duquel sont prélevées les composantes correspondantes ($\psi_\alpha$, $\psi_\beta$) du vecteur du flux magnétique de la machine, une ligne de renvoi reliant la sortie respective de l'intégrateur à l'entrée associée de ce dernier et un régulateur de zéro situé dans la ligne de renvoi, et
    d) un dispositif (10-13, 16, 17) de commande du convertisseur de fréquence, relié aux sorties des intégrateurs de tension alternative (IG, IG') et auquel sont envoyées des valeurs de consigne ($I^s$, sin $\alpha$, cos $\alpha$) pour une commande des composantes du courant statorique dont l'une ($\psi_\alpha$) et dont l'autre ($\psi_\beta$) est perpendiculaire à ce vecteur,
caractérisé par
    e) un circuit de modèle de calcul (1) chargé par des tensions correspondant au courant statorique ($i_{\varphi 1}{}^s$, $i_{\varphi 2}{}^s$) et à la position du rotor (sin $\lambda$, cos $\lambda$) ainsi que dans le cas d'une machine synchrone, au courant magnétisant ($i_{\varphi 1}$) et qui simule par le calcul les processus conduisant à la formation du flux de la machine, et détermine au moyen de la position du rotor, des grandeurs de modèle ($\psi_{\alpha 0}$, $\psi_{\beta 0}$) pour les composantes du flux, et
    f) une application telle des grandeurs de modèle ($\psi_{\alpha 0}$, $\psi_{\beta 0}$) des composantes du flux aux entrées des régulateurs de zéro que chaque régulateur de zéro compense par réglage une composante continue de la différence ($\psi_\alpha - \psi_{\alpha 0}$ ou $\psi_\beta - \psi_{\beta 0}$) entre la composante de flux ($\psi_\alpha$ ou $\psi_\beta$), déterminée dans l'intégrateur de tension alternative (IG ou IG') associé, et la grandeur de modèle ($\psi_{\alpha 0}$ ou $\psi_{\beta 0}$) pour cette composante de flux (figure 8).

2. Dispositif d'entraînement d'une machine à champ tournant suivant la revendication 1, caractérisé par le fait que chaque régulateur de zéro contient un régulateur à action proportionnelle, auquel la différence ($\psi_\alpha - \psi_{\alpha 0}$ ou $\psi_\beta - \psi_{\beta 0}$) est envoyée proportionnellement à un facteur de pondération (a), et un régulateur à action intégrale auquel la différence est envoyée proportionnellement à un second facteur de pondération ($b = a^2$), ainsi qu'un point de sommation (S1) pour les sorties du régulateur à l'entrée de l'intégrateur (figure 1).

3. Dispositif d'entraînement de machine à champ tournant suivant la revendication 1 ou 2, caractérisé par le fait que le circuit de modèle de calcul contient un circuit dynamique (41, 51) servant à simuler le flux à partir de la composante du courant statorique ($i_{\varphi 1}{}^s$ figure 4), parallèle au champ, dans le cas de machine asynchrone, ou à partir du courant magnétisant ($i_{\varphi 1}$, figure 5) dans le cas de machine synchrone, dans un système de coordonnées rapporté au rotor, ainsi qu'un dispositif de rotation vectorielle (47, 57) chargé par l'introduction de la position du rotor (sin $\lambda$, cos $\lambda$) pour la simulation de la composante du flux du modèle ($\psi_{\alpha 0}$) rapportée au stator (figure 4, figure 5).

4. Dispositif d'entraînement de machine à champ tournant suivant la revendication 3, caractérisé par le fait que le circuit dynamique (41, 51) est chargé par la composante du courant statorique ($i_{\varphi 1}{}^s$), qui correspond au courant de magnétisation, ou par le courant magnétisant ($I_{\varphi 1}{}^{(*)}$) et calcule une valeur ($|\psi_0|$) du flux du modèle et qu'il est prévu un étage de calcul (42, 43, 44 ; 52, 53, 54), auquel sont envoyées la valeur du flux du modèle ainsi qu'au moins la composante du courant statorique ($i_{\varphi2}^3$), perpendiculaire au champ, et qui détermine l'angle de modèle ($\varphi1$) du flux par rapport à l'axe du rotor et un circuit de calcul (45, 46 ; 55, 56) qui est branché en aval et qui calcule, à partir de l'angle de modèle ($\varphi_1$) et de la valeur ($|\psi_0|$) du flux du modèle, les composantes du flux du modèle dans un sytème de référence rapporté au rotor (figure 4, figure 5).

5. Dispositif d'entraînement de machine à champ tournant suivant la revendication 4, caractérisé par le fait que l'étage de calcul (42, 43, 44 ; 52, 53, 54) forme l'angle de modèle par intégration de la fréquence de glissement (figures 4, 5) déterminée à partir de la composante ($i_{\varphi2}^3$) du courant statorique, perpendiculaire au champ, et de la valeur ($|\psi_0|$) du flux du modèle (figures 4, 5).

6. Dispositif d'entraînement de machine à champ tournant suivant l'une des revendications 3 à 5, moyennant l'utilisation d'une machine asynchrone, caractérisé par le fait que pour décrire le courant statorique et le courant de magnétisation, les coordonnées, perpendiculaires au champ, du courant statorique sont introduites dans le circuit de modèle de calcul.

7. Dispositif d'entraînement de machine à champ tournant suivant la revendication 6, caractérisé par le fait que les composantes, rapportées au champ, du courant statorique sont formées par les composantes de valeur réelle du vecteur du courant statotique dans un système de coordonnées rapporté au stator, au moyen d'un autre dispositif de rotation vectorielle (40), auquel la position angulaire (sin $\varphi$, cos $\varphi$) du vecteur du flux du modèle dans le système de référence rapporté au stator est envoyée par l'intermédiaire d'un analyseur vectoriel (48) relié à la sortie du circuit de modèle de calcul (figure 4).

8. Dispositif d'entraînement de machine à champ tournant suivant l'une des revendications 3 à 5, moyennant l'utilisation d'une machine synchrone, caractérisé par le fait que la valeur de consigne du courant magnétisant est envoyée, en tant que tension correspondant au courant magnétisant, au circuit de modèle de calcul et que les composantes, rapportées au champ, du courant statorique sont envoyées en tant que tensions correspondant au courant statorique, au circuit de modèle de calcul.

FIG 1

0 043 973

FIG 2

FIG 3

FIG 4

FIG 5

FIG 6

FIG 7

**FIG 8**